Europäisches Patentamt

European Patent Office

Office européen des brevets

(19)

(11) Publication number: **0 096 161**
**B1**

(12) **EUROPEAN PATENT SPECIFICATION**

(45) Date of publication of patent specification: **10.06.87**

(51) Int. Cl.⁴: **G 01 N 21/88**

(21) Application number: **83102155.5**

(22) Date of filing: **04.03.83**

(54) **A testing method and a device for testing subjects to be tested.**

(30) Priority: **03.06.82 JP 94012/82**

(43) Date of publication of application:
**21.12.83 Bulletin 83/51**

(45) Publication of the grant of the patent:
**10.06.87 Bulletin 87/24**

(84) Designated Contracting States:
**BE CH DE FR GB IT LI NL SE**

(56) References cited:
**GB-A-2 087 549**
**US-A-4 140 901**
**US-A-4 318 618**

**Patent Abstracts of Japan vol. 6, no. 38, 9
March 1982**

(73) Proprietor: **Eisai Co., Ltd.**
**6-10, Koishikawa 4-chome Bunkyo-ku
Tokyo 112 (JP)**

(72) Inventor: **Ryosaku, Tagaya
No. 79-1, Gedoji-cho
Isesaki-shi Gunma-ken (JP)**

(74) Representative: **Patentanwälte Kern, Popp,
Sajda, v. Bülow & Partner
Widenmayerstrasse 48 Postfach 86 06 24
D-8000 München 86 (DE)**

EP 0 096 161 B1

Courier Press, Leamington Spa, England.

The present invention relates to a method of testing wherein a plurality of objects to be tested are sequentially irradiated by a light source, the light passing through the object being transferred to a light receiving member producing a test value, the test value is compared with a standard value for judging the quality of the object, and the standard value is updated depending on further test values.

The invention further relates to a device for testing objects, especially transparent or semi-transparent objects, according to the method specified above, comprising a light source, a light receiving device for a light beam from the light source passing through the object which produces an output signal having a test value representative for the transmissivity of the object to be tested, memory means for delivering a standard value, comparator means for comparing the test value with a standard value, selection means connected to the comparator means for performing a test and judging the quality of the object according to the comparison result, and adjusting means for updating the standard value using test values from objects already tested.

A method and a device as specified above can be used for detecting foreign substances in a solution filled into or contained in a vessel such as an ampoule, a vial and the like and a leakage or pinholes or other defects in the vessel itself.

Generally, when a liquid or a solution filled into a vessel which is transparent or semi-transparent are examined, the vessel is irradiated with light, an output signal is obtained corresponding to the quantity of the light passed through the vessel, and the output signal is compared with a prescribed standard value for judging purposes.

In such a method, the quantity of light and the wavelength of light from a projector used as a light source vary in the course of time. A projector newly set and a projector, the irradiation energy of which has decreased after a certain period has elapsed, give different output signals. Therefore, if the standard value is always set constant, the judgement of the subject is not so accurate, so that even a good subject may be misjudged to be inferior.

For examining a pinhole or leak in a vessel itself, such as an ampoule or vial for a solution of chemical substances or food, the vessel is dipped into a dense dye solution, for example, of methylene blue or blue dye for food, and evacuated once and then brought back into an atmosphere of normal pressure. The dense dye is introduced into the interior of the vessel through small holes, cracks and gaps which can be inspected or observed by means of spectro-photometry.

In such an inspection method, the degree of experience and the physical condition of the inspector have an influence on the results of the examination. Also, this method is extremely inefficient. In spectro-photometry, the output signal is affected by changes of the projector lamp and the circuit composing elements such as photodiodes, a photoelectric bulb and the like of the measuring circuit system with the lapse of time and by environmental temperature changes.

Therefore, the result of measurement is changed by the characteristics of these circuit system composing elements. Further, since the absorption of a coloured solution is easily affected by environmental temperature variations, the results of measurement are influenced by the temperature at the time of measurement leading to the phenomenon that a good subject is misjudged to be inferior.

A method of testing and a device for testing objects in which the standard value is updated depending on further test values, as mentioned above, are disclosed in US—A—4,140,901. The known system, however, implies a complicated structure wherein output signals are used during testing operation to repeatedly reduce the extent to which the fault-signal value exceeds the threshold-signal level, until finally the largest-value fault signal generated during one complete preliminary testing operation has a value just below the threshold-signal level. Accordingly, the preliminary testing operation is necessary in order to find a suitable range for selecting objects to be tested as normal or inferior, respectively. When a suitable region has been found, this region is used for making a decision as to good or bad quality of the objects. However, in determining the range for acceptable objects, fault-signals are used and the sensitivity range is sequentially broadened if necessary.

In this way, no measures are taken in the method and the device according to US—A—4,140,901 to give attention to gradual changes of the optical and electrical system generating the test values. Also, this system does not teach a feedback system making use of acceptable test values only for updating the standard value for comparison purposes.

The object underlying the present invention is to provide a method of testing and a device for testing objects, especially transparent or semi-transparent objects, which allow an improved test without being influenced by gradual changes of the light source, the components of the system and temperature changes as time passes by. Another object of the present invention is to make the standard value for judgement more reliable.

According to the invention, this problem is solved by a method which is characterized in that a sensitivity region is adjusted by a standard value setting means which is externally adjustable, and in that the test values are used for sequentially updating the standard values in such a manner that a given number of test values are stored one after the other, a mean value is computed from the stored test values, and any further test values will sequentially replace one after the other one of the old stored test values for updating the standard value, provided that each of the new test values has not been judged to be representative for a defective object, falling outside a range of acceptable values, and in that any further object will be judged depending on the current standard value derived from test values from proper objects only.

The device for testing objects according to the invention is characterized in that the adjusting means is provided with externally adjustable standard value setting means for defining a sensitivity region of the device, and with internally adjustable updating means for sequentially updating a standard value, comprising a series of memory circuits connected in parallel to an input buffer supplying test values from the light receiving device, and further connected to a cycle counter, and arithmetic circuit connected to the outputs of all the memory circuits and supplying a mean value as a current standard value, and a feedback circuit connecting the comparator means to the cycle counter, wherein the test values are sequentially stored in one of the memory circuits provided that the current test value is within a given current sensitivity region, while no enable signal for storing a new test value is supplied from the cycle counter to the memory circuits when the comparator means deliver a signal representative of an inferior object.

A further development of the device according to the invention is characterized in that the cycle counter is connected to each of the respective input sides of the group of memory circuits for controlling the replacement of the oldest data with new data every time a test value signal from the light receiving device is input through the input buffer.

A further feature according to the invention resides in that the comparator means comprises a first comparator for comparing the test value with a current minimum limit, and a second comparator for comparing the test value with a current maximum limit.

Another feature according to the invention resides in that the comparator inputs are provided with variable resistors forming standard value setting means for the comparators means.

A further development of the device according to the invention is characterized in that the comparator means comprises an OR gate circuit whose output is connected to the selection means and to the cycle counter and is capable of controlling the cycle counter not to input a specific test value into any of the memory circuits.

According to the invention, a device is provided which can employ spectro-photometry using two wavelengths or spectroscopic photometry using three wavelengths in which the influence exerted by the change of the wavelength characteristic due to the dispersion of the colouring degree of the ampoule and that of the absorption caused by temperature variations of solution contained in the coloured ampoule is decreased. When the method according to the present invention is combined with these spectro-photometric methods a device for testing inferior objects having a superior accuracy characteristic can be provided.

Further objects and features of the present invention will be apparent from the following description of the invention taken in connection with the accompanying drawings in which

Fig. 1 is a block diagram of an embodiment of a method of testing and a device for testing objects according to the method of the invention, and

Fig. 2 is a schematic diagram of a device for testing pinholes of an ampoule as an embodiment to be connected to the input terminal of Fig. 1.

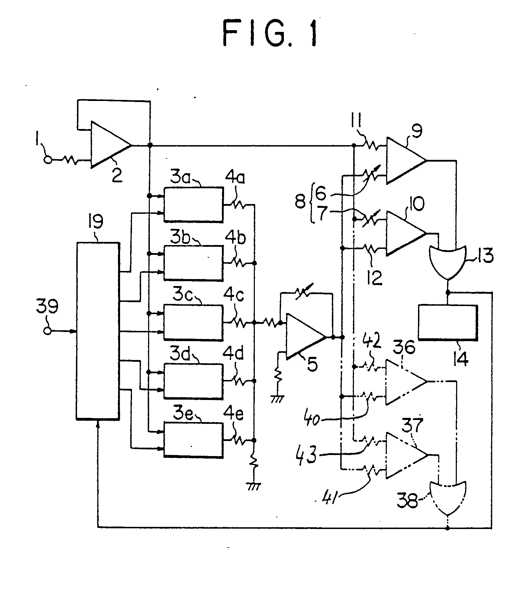

In Fig. 1 reference 1 is an input terminal of a buffer circuit 2 of an embodiment of the present invention. Detection signals obtained by detection of foreign substances in a liquid which is contained in a vessel such as an ampoule or vial, or detection signals obtained by a test method employing a dye for detecting leakage of liquid, pinholes and the like in the vessel are sequentially input to the input terminal 1.

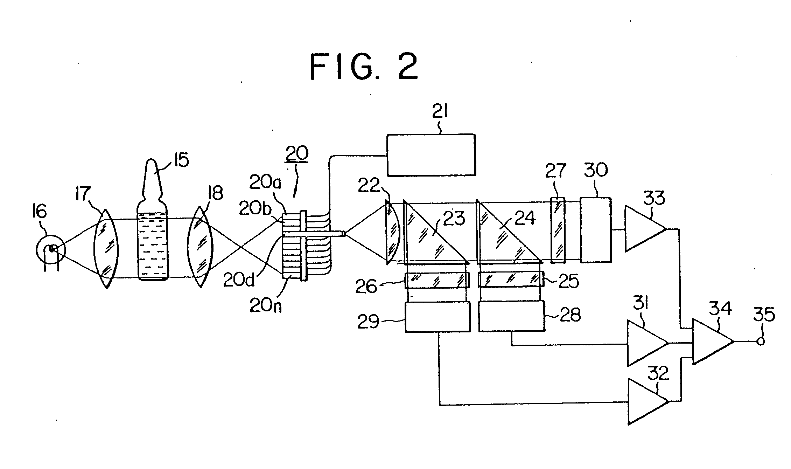

Concretely, as will be described hereinafter, a detection signal for pinholes in a vessel according to a spectro-photometry method using three wavelengths as shown in Fig. 2 is input to the input terminal 1.

The input terminal 1 is connected via buffer circuit to a plurality of memory circuits, more specifically to five memory circuits 3a, 3b,..., 3e. Data stored in these memory circuits are used as a basis to compute an average value. Although as many memory circuits as possible can be arranged, only five memory circuits are provided in this embodiment. A cycle counter 19 is connected to each input of the respective memory circuits. The cycle counter 19 inputs data output from the buffer circuit 2 sequentially to the memory circuit 3a, 3b,... 3e, wherein the first output signal from the buffer circuit 2 is input into memory circuit 3a, the second output signal is input into memory circuit 3b and so forth and all the memory circuits are loaded sequentially.

When all of the memory circuits 3a, 3b,... 3e are filled or loaded, a newly output signal from the buffer circuit 2 is entered into the first memory circuit 3a replacing an old data, the next output signal from the buffer circuit 2 replaces an old data in 3b and so forth. Thus old data in the memory circuits are replaced sequentially by new data.

The outputs of the memory circuits 3a, 3b,..., 3e are connected by way of resistors 4a, 4b,... 4e, and then connected to an arithmetic circuit 5. The outputs of the arithmetic circuit 5 and the buffer circuit 2 are each respectively connected to one input of comparators 9 and 10 through a standard value for judgement setting member 8 composed of variable resistors 6 and 7 for setting a certain width of a sensitivity region.

One of the comparators, for example the comparator 9 is set by the variable resistor 6 so that it is used to set the minimum limit of a standard judging level by which the comparator 9 judges that the subject is inferior, while the comparator 10 is set by the variable resistor 7 to be used for the maximum limit setting. To the other inputs of the respective comparators 9 and 10, output signals from the buffer circuit 2 and the arithmetic circuit 5 are input through respective resistors 11 and 12.

The output side of the respective comparators 9 and 10 is connected to a selection device 14, such as a solenoid, through a gate circuit 13 composed of an OR gate for selection of an inferior object. The output of the gate circuit 13 is also connected to the cycle counter 19.

When a signal which judges the object to be inferior is output from the gate circuit 13, this signal controls the cycle counter 19 not to take data from the buffer circuit 2 for computing the mean value.

In Fig. 2, a case is shown in which data to be input into the input terminal 1 are obtained by detecting pinholes of the ampoule 15 by a spectro-photometry method using three wavelengths.

In Fig. 2, a projector lamp 16 as a light source, an objective lens 17, a focussing lens 18, and a light receiving member 20 are arranged in this order with an ampoule 15 placed between the objective lens 17 and the focussing lens 18.

The light receiving member 20 is composed of an assembly of microlight receivers 20a, 20b,... such as light guides divided into a plurality of small sections corresponding to the foreign substance detection limit of such glass fibres.

Each output side of the respective microlight receivers 20a, 20b,... is connected to a detection device 21 for foreign substances in an ampoule. A light guide for example for one bit, detecting a pinhole is introduced from a section of microlight receivers 20a, 20b,....

Two prisms, namely a first prism 23 and a second prism 24 are arranged through a condenser lens 22 at the tip of the light guide 20d. The light passing through the condenser lens 22 is divided into three, that is the light refracted by the first prism 23, the light passing through the first prism and being refracted by the second prism 24, and the light passing through the first and the second prisms 23 and 24. These three lights have their own or proper wavelength ranges. A wavelength filter 25 selecting the characteristic wavelength of the dye bath liquid is provided for the refracted light by the second prism 24. Standard wavelength filters 26 and 27 for comparison are respectively provided for the refracted light by the prism 23 and the light passing through the first and second prisms 23 and 24. The output sides of these wavelength filters 25, 26 and 27 are connected to a comparator 34 through photoelectric transfer elements 28, 29 and 30 such as photodiodes and amplifiers 31, 32 and 33.

The output terminal 35 of the comparator 34 is coupled with the input terminal 1 in Fig. 1.

The manner of functioning of the present invention will be described in the following.

In a device according to Fig. 1 and 2, an ampoule 15 as an object to be examined is evacuated and dipped into a dense dye solution, such as methylene blue or blue dye for food, and is then brought back to the normal pressure. If the ampoule 15 has any pinhole, crack or gap, the dense dye solution will be introduced into the ampoule 15 through it.

Ampoules 15 thus pretreated are sequentially fed between the objective 17 and the focussing lens 18 by a supply device (not shown). When a high speed revolution of the ampoule 15 once set is quickly stopped, the foreign substance in the ampoule 15, if any, will float.

When any of the microlight receivers 20a, 20b, detects a foreign substance, outputting a signal of detection to the foreign substance detection device 21, then the ampoule 15 containing the foreign substance will be eliminated.

When the ampoule 15 itself has a defect such as a pinhole and the dense dye solution is introduced into the ampoule 15, the light passing through the ampoule 15 is coloured. The coloured light being introduced into a light guide 20d is irradiated from the tip. The irradiated light made into a parallel light beam or bundle of rays passes through the first prism 23, is refracted by the second prism 24 and passes through the wavelength filter 25 which selects the characteristic wavelength of the dye bath.

The light beam or bundle of rays passing through the wavelength filter 25 is then transformed into an electric signal in the photoelectric transfer element 28 and transmitted to the comparator 34 through the amplifier 31. The other two signals for two wavelengths obtained in the same way for the standard are also transmitted to the comparator 34.

These three signals are mutually compared for the absorption or the transmittance in three wavelength regions and an analogue signal of the computed value resulted from computation is outputted.

The output signals at the output 35 of the comparator 34 are input into the input terminal 1 in Fig. 1. The input signals are sequentially stored in the memory circuits 3a, 3b,... 3e through the buffer circuit 2. These signals input into memory circuits 3a, 3b,... are added up and then divided by the number of inputs for computing a mean value. The output signal of the mean value is computed into a standard judging value having a standard judging level width with a minimum limit value and a maximum limit value. The minimum value signal is input into one input of the comparator 9, and the maximum value signal is input into one input of the comparator 10.

The measured output signals from the buffer circuit 2 are input into the respective other inputs of the comparators 9 and 10. If the input signal is a signal exceeding the maximum limit or a signal less than the minimum limit, any one of the comparators 9 and 10 will output a detection signal indicating a defect, and when a signal is within the standard judging level width, no error signal is output. The outputs from the comparators 9 and 10 are combined to form an output signal for judgement in the gate circuit 13 operating a selection device 14 for eliminating the inferior subject. When a signal which has judged a subject to be inferior is output from the gate circuit 13, the cycle counter 19 controls the memory circuits 3a, 3b,... 3e not to input the measured output signal which measured the inferior object.

That is, the measured output signal for an inferior object is far above or below a certain standard value, and such a signal may substantially raise or lower the mean value and make the accuracy of judgement lower; therefore, such a signal is eliminated from the computation of the mean value. In some cases, the level for the standard judgement value and the level width to be eliminated from the computation of the mean value are to be set separately. Then, the output signal for judgement from the gate circuit 13 will not be input, rather a different level width set by comparators 36 and 37, provided otherwise, as shown in a chain line in Fig. 1, may be compared with the measured value, and a resultant output signal may be input to the cycle counter 19 through a gate circuit 38 comprising an OR gate.

As shown in Fig. 1, the output of the arithmetic circuit 5 is respectively connected to one input each of the comparator 36 and 37 through resistors 40 and 41. The output of the buffer circuit 2 is respectively connected to each other input of the comparators 36 and 37 through resistors 42 and 43. The output side of the respective comparators 36 and 37 is connected to the cycle counter 19 through the gate circuit 38. In this case, the output side of the gate circuit 13 is not connected to the cycle counter 19. In this manner, the level for the standard judgement value and the level width to be eliminated from the computation of the mean value are set separately.

For controlling the timing of switch-over of the memory circuits 3a, 3b,... 3e, a signal which checks whether there is a vessel from a device for supplying ampoules or not is input to the cycle counter 19. Once the output signal for judgement from the gate circuit 13 is input and the judgement is preformed, a succeeding new measured output signal is input into a memory circuit for replacing the oldest data existing in the memory circuits to compute a new mean value. The composition of the memory circuit group comprising such memory circuits 3a, 3b,... 3e, the cycle counter 19 and the arithmetic circuit 5 will suffice, however, for treating a number of signals; the treatment by a micro-computor using the digital value transformed from the analogue value is made easy and the composition of the circuit group is made simple. The variation of the mean value is decreased by increasing the number of memory circuits.

However, as described above, when a circuit is introduced which refuses an inferior signal, even a minimum number of memory circuits can provide increased accuracy of the mean value.

**Claims**

1. A method of testing, wherein a plurality of objects (15) to be tested are sequentially irradiated by a light source (16), the light passing through the object (15) being transferred to a light receiving member (20) producing a test value, the test value is compared (9, 10) with a standard value for judging the quality of the object (15), and the standard value is updated depending on further test values,

characterized in that a sensitivity region is adjusted by a standard value setting means (6, 7, 8) which is externally adjustable,

and in that the test values are used for sequentially updating the standard values in such a manner that a given number of test values are stored one after the other,

a mean value is computed from the stored test values, and any further test value will sequentially replace one after the other one of the old stored test values for updating the standard value,

provided that each of the new test values has not been judged to be representative for a defective object, falling outside a range of acceptable values, and in that any further object will be judged depending on the current standard value derived from test values from proper objects (15) only.

2. A device for testing objects, especially transparent or semi-transparent objects, according to the method of claim 1, comprising

— a light source (16),

— a light receiving device (20) for a light beam from the light source (16) passing through the object (15) which produces an output signal having a test value representative for the transmissivity of the object (15) to be tested,

— memory means (3a—3e, 4a—4e, 5) for delivering a standard value,

— comparator means (6—13) for comparing the test value with a standard value,

— selection means (14) connected to the comparator means (6—13) for performing a test and judging the quality of the object (15) according to the comparison result,

— adjusting means for updating the standard value using test values from objects already tested,

characterized in that the adjusting means is provided with externally adjustable standard value setting means (6, 7, 8) for defining a sensitivity region of the device, and with internally adjustable updating means (1—13, 19) for sequentially updating a standard value, comprising

— a series of memory circuits (3a—3e, 4a—4e) connected in parallel to an input buffer (1, 2) supplying test values from the light receiving device (20), and further connected to a cycle counter (19),

— an arithmetic circuit (5) connected to the outputs of all the memory circuits (3a—3e, 4a—4e) and supplying a mean value as a current standard value,

— and a feedback circuit connecting the comparator means (6—13) to the cycle counter (19),

wherein the test values are sequentially stored in one of the memory circuits (3a—3e, 4a—4e) provided that the current test value is within a given current sensitivity region, while no enable signal for storing a new test value is supplied from the cycle counter (19) to the memory circuits when the comparator means (6—13) deliver a signal representative of an inferior object (15).

3. The device according to claim 2, characterized in that the cycle counter (19) is connected to each of the respective input sides of the group of memory circuits (3a—3e, 4a—4e) for controlling the replacement of the oldest data with new data every time a test value signal from the light receiving device (20) is input through the input buffer (1, 2).

4. The device according to claim 2 or 3, characterized in that the comparator means (6—13) comprises a first comparator (9) for comparing the test value with a current minimum limit, and a second comparator (10) for comparing the test value with a current maximum limit.

5. The device according to any of claims 2 to 4, characterized in that the comparator inputs are provided with variable resistors (6, 7) forming standard value setting means (8) for the comparator means (6—13).

6. The device according to any of claims 2 to 5, characterized in that the comparator means (6—13) comprises an OR gate circuit (13) whose output is connected to the selection means (14), to the cycle counter (19) and is capable of controlling the cycle counter (19) not to input a specific test value into any of the memory circuits (3a—3e, 4a—4e).

**Patentansprüche**

1. Testverfahren, bei dem eine Vielzahl von zu testenden Gegenständen (15) nacheinander mit einer Lichtquelle (16) bestrahlt wird, das durch den Gegenstand (15) hindurchgehende Licht zu einer Lichtempfängereinrichtung (20) übertragen wird, die einen Testwert erzeugt, der Testwert mit einem Standardwert verglichen (9, 10) wird, um die Qualität des Gegenstandes (15) zu beurteilen, und der Standardwert in Abhängigkeit von weiteren Testwerten aktualisiert wird,

dadurch gekennzeichnet,

daß ein Empfindlichkeitsbereich mit einer Standardwert-Einstelleinrichtung (6, 7, 8) eingestellt wird, die extern einstellbar ist,

daß die Testwerte zum sequentiellen Aktualisieren der Standardwerte in der Weise verwendet werden, daß eine vorgegebene Anzahl von Testwerten einer nach dem anderen gespeichert werden,

wobei ein Mittelwert aus den gespeicherten Testwerten berechnet wird und jeder weitere Testwert einen nach dem anderen der alten gespeicherten Testwerte ersetzt, um den Standardwert zu aktualisieren,

vorausgesetzt, daß der jeweilige der neuen Testwerte nicht also repräsentativ für einen defekten Gegenstand beurteilt worden ist, der aus einem Bereich von akzeptablen Werten herausfällt,

und daß jeder weitere Gegenstand in Abhängigkeit von dem aktuellen Standardwert beurteilt wird, der nur aus Testwerten von ordnungsgemäßen Gegenständen (15) abgeleitet ist.

2. Vorrichtung zum Testen von Gegenständen, insbesondere von transparenten oder halbtransparenten Gegenständen, nach dem Verfahren gemäß Anspruch 1, umfassend

— eine Lichtquelle (16),

— eine Lichtempfängereinrichtung (20) für einen durch den Gegenstand (15) hindurchgehenden Lichtstrahl von der Lichtquelle (16), der ein Ausgangssignal mit einem Testwert erzeugt, der repräsentativ für die Durchlässigkeit des zu testenden Gegenstandes (15) ist,

— eine Speichereinrichtung (3a—3e, 4a—4e, 5) zur Lieferung eines Standardwertes,

— eine Vergleichseinrichtung (6—13) zum Vergleichen des Testwertes mit einem Standardwert,

— eine Wähleinrichtung (14), die an die Vergleichseinrichtung (6—13) angeschlossen ist, um einen Test durchzuführen und die Qualität des Gegenstandes (15) gemäß dem Vergleichsergebnis zu beurteilen,

— eine Einstelleinrichtung zum Aktualisieren des Standardwertes unter Verwendung von Testwerten von bereits getesteten Gegenständen,

dadurch gekennzeichnet,

daß die Einstelleinrichtung mit einer extern einstellbaren Standardwert-Einstelleinrichtung (6, 7, 8), um einen Empfindlichkeitsbereich der Vorrichtung zu definieren, und mit einer intern einstellbaren Aktualisierungseinrichtung (1—13, 19) versehen ist, um einen Standardwert sequentiell zu aktualisieren, umfassend

— eine Reihe von Speicherschaltungen (3a—3e), die parallel an einen Eingangspuffer (1, 2) angeschlossen sind, der Testwerte von der Lichtempfängereinrichtung (20) liefert, und die außerdem an einen Zykluszähler (19) angeschlossen sind,

— eine Rechenschaltung (5), die an die Ausgänge von sämtlichen Speicherschaltungen (3a—3e, 4a—4e) angeschlossen ist und einen Mittelwert als aktuellen Standardwert liefert,

— und eine Rückkopplungsschaltung, welche die Vergleichseinrichtung (6—13) mit dem Zykluszähler (19) verbindet, wobei die Testwerte nacheinander in einer der Speicherschaltungen (3a—3e, 4a—4e) gespeichert werden, vorausgesetzt daß der aktuelle Testwert innerhalb eines vorgegebenen aktuellen Empfindlichkeitsbereites liegt, während kein Freigabesignal zu Speichern eines neuen Testwertes vom Zykluszähler (19) an die Speicherschaltungen geliefert wird, wenn die Vergleichseinrichtung (6—13) ein Signal liefert, das repräsentativ für einen minderwertigen Gegenstand (15) ist.

3. Vorrichtung nach Anspruch 2,

dadurch gekennzeichnet,

daß der Zykluszähler (19) an jede der entsprechenden Eingangsseiten der Gruppe von Speicherschaltungen (3a—3e, 4a—4e) angeschlossen ist, um das Ersetzen der ältesten Daten durch neue Daten jedesmal dann zu steuern, wenn ein Testwertsignal von der Lichtempfängereinrichtung (20) durch den Eingangspuffer (1, 2) eingegeben wird.

4. Vorrichtung nach Anspruch 2 oder 3,

dadurch gekennzeichnet,

daß die Vergleichseinrichtung (6—13) einen ersten Komparator (9) zum Vergleichen des Testwertes mit einem aktuellen minimalen Grenzwert und einen zweiten Komparator (10) zum Vergleichen des Testwertes mit einem aktuellen maximalen Grenzwert aufweist.

5. Vorrichtung nach einem der Ansprüche 2 bis 4,

dadurch gekennzeichnet,

daß die Komparatoreingänge mit einstellbaren Widerständen (6, 7) versehen sind, welche die Standardwert-Einstelleinrichtung (8) für die Vergleichseinrichtung (6—13) bilden.

6. Vorrichtung nach einem der Ansprüche 2 bis 5,

dadurch gekennzeichnet,

daß die Vergleichseinrichtung (6—13) eine ODER-Gatterschaltung (13) aufweist, deren Ausgang mit der Wähleinrichtung (14) und dem Zykluszähler (19) verbunden und in der Lage ist, den Zykluszähler (19) so zu steuern, daß er einen speziellen Testwert nicht in irgendeine der Speicherschaltungen (3a—3e, 4a—4e) eingibt.

**Revendications**

1. Procédé de contrôle, dans lequel une multiplicité d'objets (15) à contrôler sont séquentiellement éclairés par une source de lumière (16), la lumière traversant l'objet (15) étant transférée à une élément récepteur de lumière (20) produisant une valeur de contrôle, la valeur de contrôle est comparée (9, 10) à une valeur standard pour juger la qualité de l'objet (15), et la valeur standard est actualisée en fonction des valeurs de contrôle successives, caractérisé en ce qu'une plage de sensibilités est réglée par des moyens de fixation des valeurs standards (6, 7, 8) qui sont réglables de l'extérieur et en ce que les valeurs de contrôle sont utilisées pour actualiser séquentiellement les valeurs standards de telle manière qu'un nombre donné de valeurs de contrôle sont stockées l'une après l'autre, une valeur moyenne est calculée à partir des valeurs de contrôle stockées et toute valeur de contrôle ultérieure remplace successivement l'une après l'autre l'une des anciennes valeurs de contrôle stockées pour actualiser la valeur standard, pourvu que chacune des nouvelles valeurs de contrôle n'ait pas été jugée comme étant représentative d'un objet défectueux, tombant à l'extérieur d'une plage de valeurs acceptables, et en ce que tout objet ultérieur sera jugé en fonction de la valeur standard courante dérivée des valeurs de contrôle provenant des seuls objets corrects (15).

2. Dispositif pour contrôler des objets, notamment les objets transparents ou semi-transparents, selon le procédé de la revendication 1, comprenant une source lumineuse (16), un dispositif récepteur de lumière (20) pour un faisceau lumineux provenant de la source de lumière (16) passant à travers l'objet (15), qui produit un signal de sortie ayant une valeur de contrôle représentatif de la transmissivité de l'objet (15) à contrôler, des moyens de mémoires (3a—3e, 4a—4e, 5) pour fournir une valeur standard, des moyens de comparateurs (6—13) pour comparer la valeur de contrôle à une valeur standard, des moyens de sélection (14) raccordés aux moyens de comparateurs (6—13) pour effectuer un contrôle et juger la qualité de l'objet (15) en fonction des résultats de la comparaison, et des moyens de réglage pour actualiser la valeur standard en utilisant les valeurs de contrôle en provenance des objets déjà contrôlés, caractérisé en ce qu'il est prévu des moyens de réglage avec des moyens de fixation de la valeur standard réglable de l'extérieur (6, 7, 8) pour définir une plage de sensibilité du dispositif, des moyens d'actualisation réglables de l'intérieur (1—13, 19) pour actualiser successivement une valeur standard, comprenant une série de circuits de mémoires (3a—3e, 4a—4e) raccordés en parallèle à un tampon d'entrée (1, 2) fournissant des valeurs de contrôle en provenance du dispositif récepteur de lumière (20) et en outre raccordés à une compteur de cycles (19), un circuit arithmétique (5) raccordé aux sorties de tous les circuits de mémoires (3a—3e, 4a—4e) et fournissant une valeur moyenne comme valeur standard courante, et un circuit de retour raccordant les moyens de comparateurs (6—13) au compteur de cycles (19), les valeurs de contrôle étant successivement stockées dans l'un des circuits de mémoires (3a—3e, 4a—4e) pourvu que la valeur de contrôle courante se trouve à l'intérieur d'une plage de sensibilités courantes données, tandis qu'aucun signal de validation pour stocker une nouvelle valeur de contrôle n'est fournie par le compteur de cycles (19) aux circuits de mémoires lorsque les moyens de comparateurs (6—13) fournissent un signal représentatif d'un objet défectueux (15).

3. Dispositif selon la revendication 2, caractérisé en ce que le compteur de cycles (19) est raccordé à chacune des entrées respectives du groupe de circuits de mémoires (3a—3e, 4a—4e) pour commander le remplacement de la donnée la plus ancienne par une nouvelle donnée chaque fois qu'un signal de valeur de contrôle provenant du dispositif récepteur de lumière (20) est introduit par l'intermédiaire du tampon d'entrée (1, 2).

4. Dispositif selon la revendication 2 ou 3, caractérisé en ce que les moyens de comparateurs (6—13) comprennent un premier comparateur (9) pour comparer la valeur de contrôle à une limite minimale courante et un deuxième comparateur (10) pour comparer la valeur de contrôle à une limite maximale courante.

5. Dispositif selon l'une quelconque des revendications 2 à 4, caractérisé en ce que les entrées des comparateurs sont équipées de résistances variables (6, 7) formant les moyens de fixation des valeurs standards (8) pour les moyens de comparateurs (6—13).

6. Dispositif selon l'une quelconque des revendications 2 à 5, caractérisé en ce que les moyens de comparateurs (6—13) comprennent un circuit porte OU (13) dont la sortie est raccordée aux moyens de sélection et au compteur de cycles (19) et est susceptible de commander au compteur de cycles (19) de ne pas introduire une valeur de contrôle spécifique dans l'un quelconque des circuits de mémoires (3a—3e, 4a—4e).

# FIG. 1

# FIG. 2

0 096 161